# EUROPÄISCHE PATENTSCHRIFT

(11) **EP 1 533 244 B1**
(45) Veröffentlichungstag und Bekanntmachung des Hinweises auf die Patenterteilung: **03.06.2009**
(21) Anmeldenummer: 04009472.4
(22) Anmeldetag: 22.04.2004
(51) Int. Cl.: B65D 43/16

(54) **Behälter mit schwenkbar angelenktem Deckel**
Container with pivotally mounted cover
Réceptacle avec un couvercle monté de manière pivotante

(30) Priorität: 19.11.2003 DE 20317866 U
(43) Veröffentlichungstag der Anmeldung: 25.05.2005
(73) Patentinhaber: Fritz Schäfer GmbH, 57290 Neunkirchen (DE)
(72) Erfinder: Schäfer, Gerhard, 57290 Neunkirchen (DE)
(74) Vertreter: Grosse, Wolf-Dietrich Rüdiger

(56) Entgegenhaltungen:
- DE-U1- 9 408 377
- DE-U1- 20 304 628
- FR-A- 2 809 090

## Beschreibung

Die Erfindung betrifft einen Behälter, der mindestens einen am oberen Ende einer Behälterwand mit Einsteckscharnieren angelenkten Deckel aufweist, wobei die Einsteckscharniere zur Deckelbefestigung mit einem Lagerabschnitt in eine Aussparung des Deckelrandes eingesetzt werden und mit einem unterhalb des Lagerabschnitts vorgesehenen, an einer Außenfläche mindestens eine vertikal verlaufende Sicherungsnase aufweisenden Steckriegel rastend in eine Aufnahmeöffnung der Behälterwand eintauchen, bis die Sicherungsnase unterhalb der Aufnahmeöffnung ihre eingesteckte Position einnimmt,

Ein derartiger Behälter, dessen vier Wände, d.h. Längs- und Stirnwände, eine Ladeöffnung umgrenzen, bei dem zwei Deckelhälften an gegenüberliegenden Längswänden mit jeweils solchen Einsteckscharnieren angelenkt sind, ist durch das DE 94 08 377.0 U1 bekanntgeworden. Auf die Wände des dort konischen Behälters ist ein kragenartiger Oberrand aufgesetzt, in dessen Hohlraum an zwei Längsseiten die Aufnahmeöffnungen für den Steckriegel der Einsteckscharniere vorgesehen sind. Die beiden Deckelhälften besitzen an ihren äußeren Seitenkanten, d.h. an den Anscharnierungsseiten einen sich rechtwinklig zur Deckeloberfläche erstreckenden Deckelrand in Form einer Hohlraum-Wulst. In dieser sind drei Aussparungen im Abstand zueinander ausgebildet. An den senkrecht zur Deckeloberfläche verlaufenden Innenwänden der Aussparungen angeformte Schwenkzapfen stehen einander gegenüberliegend in die Aussparung vor. Auf diese Schwenk- bzw. Scharnierzapfen wird das Einsteckscharnier mit seinem eine entsprechende zylindrische Öffnung aufweisenden Lagerabschnitt aufgesteckt, so daß das Einsteckscharnier die Zapfen aufnimmt bzw. umschließt.

Mit solchen in die Aussparungen eingesetzten Einsteckscharnieren ist es möglich, die Deckelhälften schnell und einfach am oberen Ende der Behälterwände zu befestigen. Die Deckelhälften sind damit in ihrer Offenstellung, in der sie sich nach außen wegklappen lassen, und in ihrer Schließstellung unverlierbar am Behälter angebracht. Dabei ist es gleichwohl möglich, die Deckelhälften im Bedarfsfall vom Behälter zu lösen und zu entfernen. Allerdings hat sich gezeigt, dass die Scharniere und primär der Behälteroberrand oder Teile des Deckels hierbei beschädigt oder gar zerstört werden können. Weiterhin ist aufgrund der weit aus dem Behälteroberrand nach oben hin vorkragenden Scharniere ein Übereinanderstapeln von beladenen Behältern in eine sichere Stapellage nur schwer zu erreichen.

Der Erfindung liegt daher die Aufgabe zugrunde, einen gattungsgemäßen Behälter ohne die genannten Nachteile zu schaffen.

Diese Aufgabe wird erfindungsgemäß durch im kennzeichnenden Teil des unabhängigen Anspruchs angegebenen Merkmale gelöst. Das Einsteckscharnier wird hierbei in vertikaler Fügerichtung von oben so weit in die Aufnahmeöffnung eingefügt, wobei sich die Sicherungsnase oder dergleichen Vorsprung in Deckungslage mit der Durchtrittsausnehmung befindet, bis eine ebene Unterfläche des Einsteckscharniers bündig auf dem Behälteroberrand aufliegt und die Sicherungsnase des Steckriegels unterhalb des Behälteroberrandes aus der Durchtrittsausnehmung vorkragt. Durch ein Anschließendes lineares Verschieben des Einsteckriegels innerhalb der Begrenzungen der Aufnahmeöffnung kann das Einsteckscharnier dann seine endgültige Fügeposition einnehmen, in der die Sicherungsnase unterhalb des Behälteroberrandes neben der Aufnahmeöffnung zur Anlage kommt, so dass das Einsteckscharnier nicht aus seinem Sitz abgehoben werden kann.

Das vertikale Eintauchen der Sicherungsnase in die Durchtrittsausnehmung wird hierbei wesentlich erleichtert, wenn die Sicherungsnase vorzugsweise keilförmig ausgebildet ist, d.h. sich in Einsteckrichtung verjüngt.

Eine bevorzugte Ausgestaltung der Erfindung sieht vor, dass die Sicherungsnase auf ihrer einer Unterseite des Behälteroberrandes zugewandten Oberfläche mit mindestens einer Fügepositionserhöhung ausgebildet ist. Mit dieser Fügepositionserhöhung lässt sich die bewegungssichere Arretierung des Einsteckscharniers in einer Verriegelungsendposition unterstützen. Die Fügepositionserhöhung kann beispielsweise in eine in der Verriegelungsposition vorgesehene komplementäre Vertiefung der Unterseite des Behälteroberrandes eintauchen.

Nach einem bevorzugten Vorschlag der Erfindung ist der Sicherungsnase bzw. deren Fügepositionserhöhung - die vorteilhaft auf der waagerechten Oberfläche der Sicherungsnase als mittig angeordnete Rippe ausgebildet sein kann - an der Unterseite des Behälteroberrandes mindestens eine nach unten abgewinkelte Sicherungsrippe zugeordnet. Die Sicherungsrippe gleitet beim Verschiebevorgang des Einsteckscharniers über die Fügepositionserhöhung der Sicherungsnase hinweg und hintergreift diese nach dem Passieren, so dass das Einsteckscharnier in seiner Fügeendposition auszugssicher gehalten wird.

Eine Ausgestaltung der Erfindung sieht vor, dass an dem der Durchtrittsausnehmung für die Sicherungsnase zugewandten Ende der Aufnahmeöffnung beidseitig eine Sicherungsrippe angeordnet ist. Von den beiden Sicherungsrippen legt sich eine an der inneren und die andere an der äußeren Fläche des Steckriegels an. Sie unterstützen damit aufgrund ihrer Führungseigenschaften das lagegenaue Fügen des Steckriegels, der von den Sicherungsrippen beidseitig eingefaßt wird.

Des weiteren ist erfindungsgemäß vorgesehen, dass das Einsteckscharnier an dem von der Sicherungsnase entfernten Stirnende des Steckriegels unterhalb eines Scharnier -Lagerabschnitts eine waagerecht verlaufende Aussparung aufweist. Die Aussparung bzw. Hinterschneidung übergreift im Zusammenspiel mit der Unterseite des Scharnier-Lagerabschnitts gabelartig, zeitgleich mit dem Verriegeln des Einsteckscharniers in die Fügeendposition mit dessen linearer Verschiebung zunehmend mehr die Wandung des Behälteroberrandes am Ende der Aufnahmeöffnung. Dadurch liegt zusammen mit der Verriegelung über die Sicherungsnasse und die Sicherungsrippe eine Mehrpunkt-Arretierung vor, die nach dem Verschließen des Deckels am Behälter ein Aushebeln des Einsteckscharniers wirkungsvoll verhindert und somit das Inhaltsgut des Behälters vor Diebstahl sch ützt.

Die erfindungsgemäßen Deckelscharniere können leicht und schnell an den entsprechenden Transportbehältern eingesteckt und verriegelt sowie im Bedarfsfall durch ein einfaches Entriegeln und Herausziehen ausgetauscht werden, ohne dabei die Scharniere, den Behälteroberrand bzw. den Deckel selbst zu beschädigen.

Weitere Einzelheiten und Merkmale der Erfindung ergeben sich aus den Ansprüchen und der nachfolgenden Beschreibung von in den Zeichnungen dargestellten Ausführungsbeispielen der Erfindung. Es zeigen:
- Fig. 1: eine Ansicht eines Transportbehälters mit einer über Einsteckscharniere angelenkten Deckelhälfte, von einer Längsseite her gesehen;

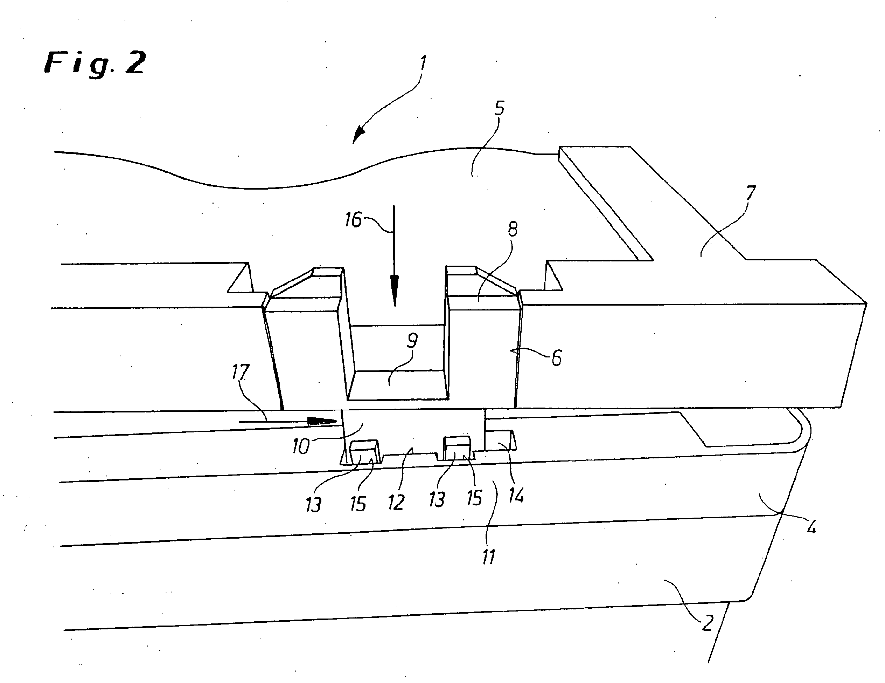

- Fig. 2: in einer Vorderansicht als Einzelheit von Fig. 1 ein Einsteckscharnier mit zwei Sicherungsnasen, noch vor der Fügeendposition dargestellt;
- Fig. 3: eine Teilansicht auf eine Transportbehälter-Längswand von innen mit einer anderen Ausführung eines Einsteckscharniers, das nur eine Sicherungsnase aufweist, perspektivisch und vor dem Fügevorgang dargestellt;
- Fig. 4: eine Darstellung wie gemäß Fig. 3 mit demgegenüber das Einsteckscharnier in einer vertikalen Zwischen-Fügeposition zeigend;
- Fig. 5: eine Darstellung wie gemäß Fig. 3 mit demgegenüber vollständig vertikal eingefügtem Einsteckscharnier; und
- Fig. 6: eine Darstellung wie gemäß Fig. 3 mit hier vollständig vertikal eingefügtem und verriegeltem Einsteckscharnier.

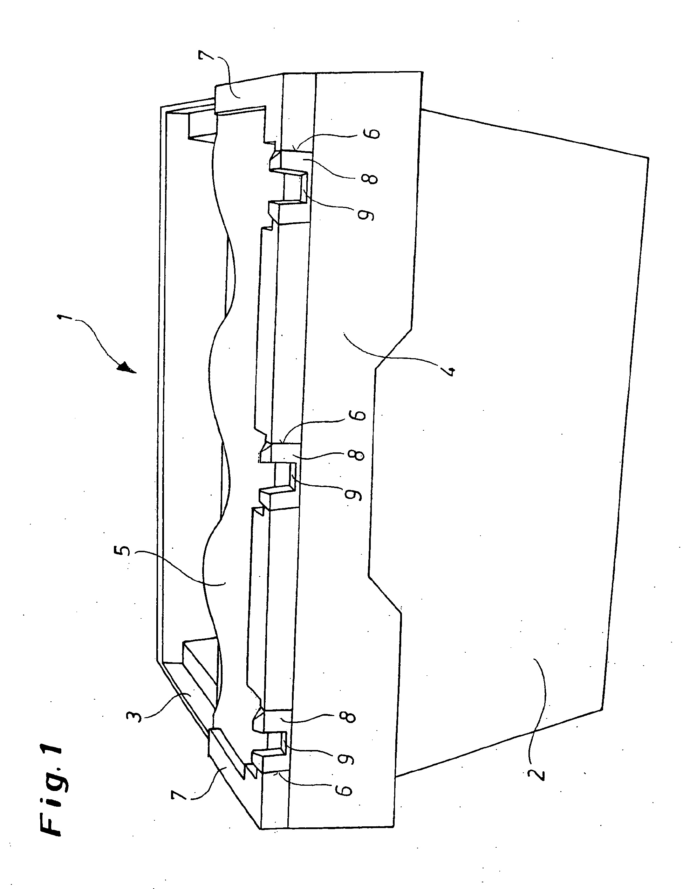

Ein in Fig. 1 als. Teilansicht gezeigter Transportbehälter 1 besteht aus einem hier nicht näher dargestellten Boden und von diesem hochragenden Längs- und Stirnwänden 2, 3. Die Behälterwände 2, 3 werden an ihrem oberen Ende von einem kragenartigen Oberrand 4 eingefaßt. An den Längswanden 2 sind den Behälter 1 verschließende Deckelhälften 5, von denen eine gezeigt ist, schwenkbeweglich anscharniert. Zur Deckel-Anscharnierung dienen im Ausführungsbeispiel drei an der Längswand 2 in entsprechende Aussparungen 6 von an der Deckelhälfte 5 ausgebildeten Deckelrand-Wulsten 7 eingesetzte Einsteckscharniere 8.

Die Einsteckscharniere 8 bestehen aus einem im wesentlichen U-förmigen Lagerabschnitt 9, der in seinen Abmessungen der Aussparung 6 der Deckelrand-Wulst 7 angepaßt ist. An dem Einsteckscharnier 8 ist einstückig mit dem Lagerabschnitt 9 nach unten hin ein Steckriegel 10 angeformt. Dieser ist an seiner der Außenwand 11 des Oberrandes 4 zugewandten Außenfläche 12 mit zwei vertikal verlaufenden Sicherungsnasen 13 versehen, denen in den Begrenzungen einer Aufnahmeöffnung 14 des Oberrandes 4 jeweils eine Durchtrittsausnehmung 15 zugeordnet ist. Nachdem der Steckriegel 10 in vertikaler Fügerichtung (Pfeil 16) in die Aufnahmeöffnung 14 eingeschoben wurde, lässt er sich durch einen anschließenden Verschiebevorgang in horizontaler Fügerichtung (Pfeil 17) über die Sicherungsnasen 13 innerhalb der Aufnahmeöffnung 14 auszugssicher verriegeln.

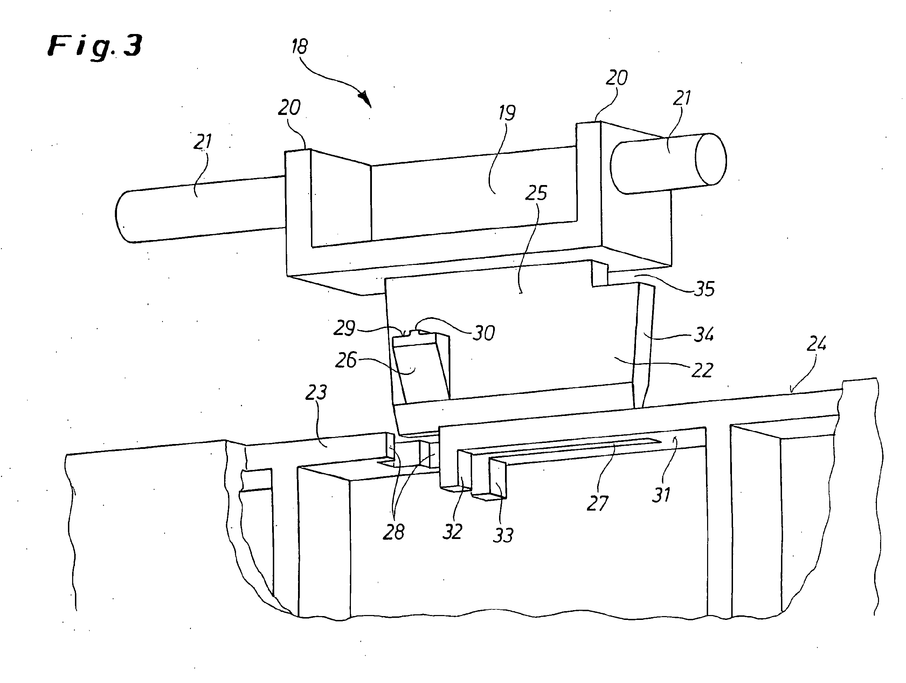

In den Fig. 3 bis 6 ist eine andere Ausführungsform eines Einsteckscharniers 18 dargestellt. Dieses besteht aus einem im wesentlichen wannenartigen, an einer äußeren Längsseite von einer Wand begrenzten Lagerabschnitt 19, der an seinen vertikalen Flanschen 20 zueinander diametral angeordnete Scharnierzapfen 21 aufweist, die in der Einbaulage in Aufnahmen eines hier nicht dargestellten Behälterdeckels lagern. An den Einsteckscharnieren 18 ist einstückig mit dem Lagerabschnitt 19 nach unten hin ein flacher Steckriegel 22 angeformt. Dieser ist an seiner einem Innensteg 23 einer Aufnahmeöffnung 27 des Behälteroberrandes 24 zugewandten Außenfläche 25 mit einer vertikal verlaufenden, keilförmigen Sicherungsnase 26 versehen, der in den Begrenzungen der Aufnahmeöffnung 27 des Behälteroberrandes 24 eine Durchtrittsausnehmung 28 zugeordnet ist. Die Sicherungsnase 26 ist auf ihrer waagerechten Oberfläche 29 mit einer mittig angeordneten Fügepositionserhöhung 30 in Form einer Rippe versehen.

Beidseitig der Aufnahmeöffnung 27 ist an der Unterseite 31 des Behälteroberrandes 24 angrenzend an die Durchtrittsausnehmung 28 jeweils eine nach unten abgewinkelte Sicherungsrippe 32, 33 angeordnet. Die innenliegende Sicherungsrippe 32 ist zur Verriegelung der Sicherungsnase 26 vorgesehen. Beide Sicherungsrippen 32, 33 stellen im Zusammenspiel außerdem eine lagegenaue, zusätzliche Führung für den Steckriegel 22 bereit.

Des weiteren ist an dem von der Sicherungsnase 26 entfernten Stirnende 34 des Steckriegels 22 unterhalb des Lagerabschnitts 19 eine waagerecht verlaufende Eck-Aussparung 35 ausgebildet.

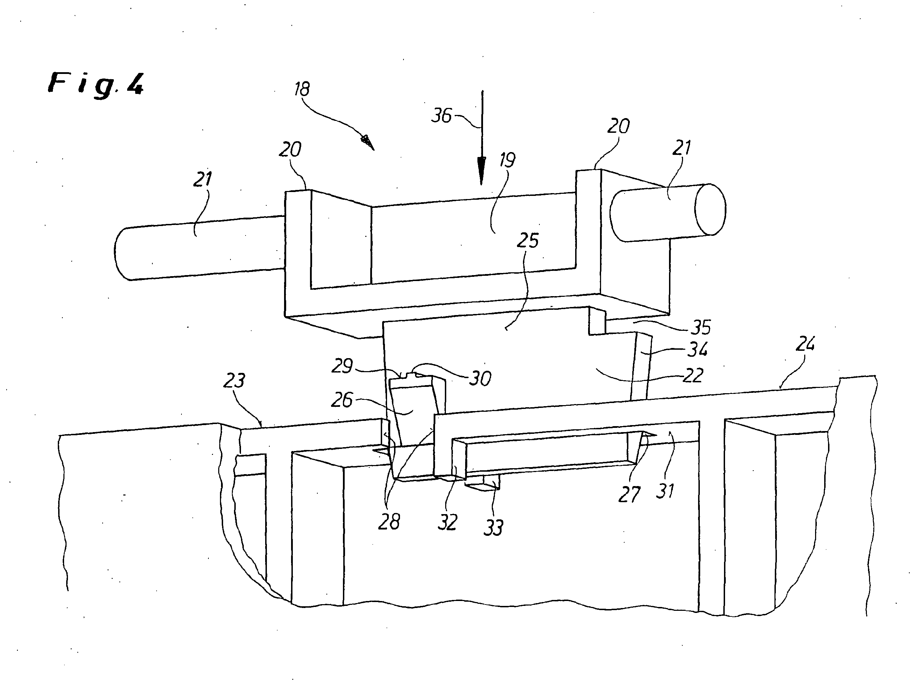

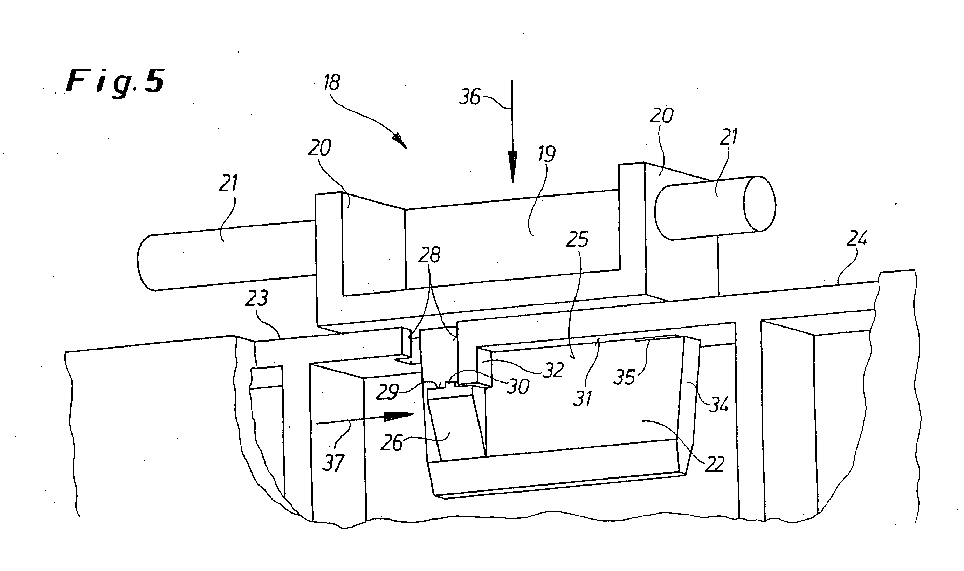

Das Fügen bzw. Einfügen eines Einsteckscharniers zum Befestigen einer Deckelhälfte wird anhand der Figuren 3 bis 6 für das Einsteckschamier 18 näher beschrieben. Demnach wird das Einsteckscharnier 18 nach dem in Fig. 3 gezeigten Ansetzen oberhalb und in Flucht mit der Aufnahmeöffnung 27 des Behälteroberrandes 24, so dass sich auch die Sicherungsnase 26 mit der Fügepositionserhöhung 30 in Deckungslage mit der Durchtrittsausnehmung 28 befindet, mit seinem Steckriegel 22 in vertikaler Fügerichtung (Pfeil 36 in Fig. 4) sukzessive so weit in die Aufnahmeöffnung 27 eingeschoben, bis der Lagerabschnitt 19 auf dem Behälteroberrand 24 bündig aufliegt und die Sicherungsnase 26 mit ihrer Oberfläche 29 unterhalb der Sicherungsrippe 32 liegt (vgl. hierzu Fig. 4 und 5).

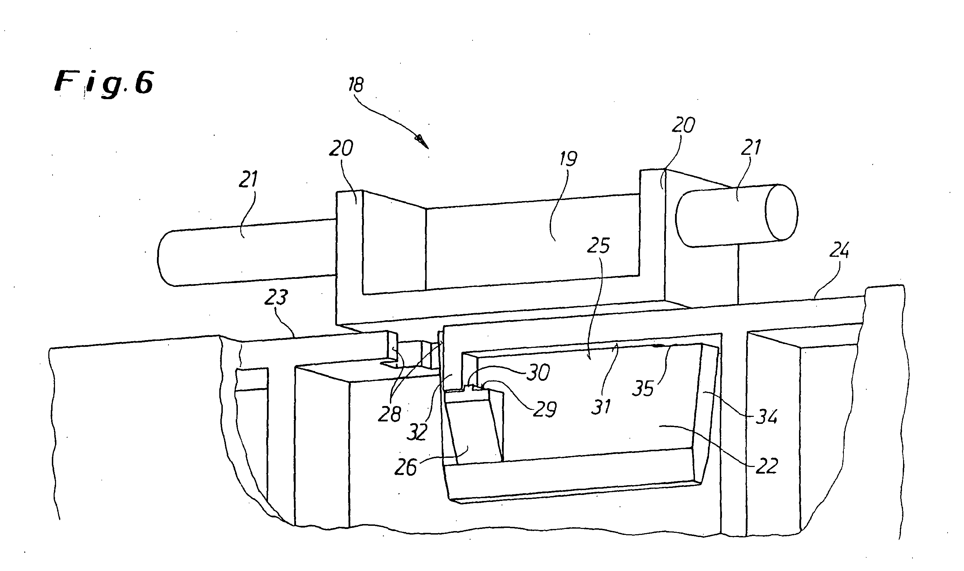

Daran anschließend wird das Einsteckscharnier 18 in horizontaler Fügerichtung (Pfeil 37) nach rechts innerhalb der Aufnahmeöffnung 27 verschoben, wobei einerseits die innenliegende Sicherungsrippe 32 über die Fügepositionserhöhung 30 der Sicherungsnase 26 gleitet und diese nach dem Passieren hintergreift (vgl. Fig. 6). Andererseits schiebt sich damit einhergehend die Aussparung 35 des Steckriegels 22 am Ende der Aufnahmeöffnung 27 über die Wandungsdicke des Behälteroberrandes 24. Mit dem Erreichen der Bewegungsendposition wird das Einsteckscharnier 18 sowohl in horizontaler Richtung, über die die Fügepositionserhöhung 30 hintergreifendeSicherungsrippe 32, als auch in vertikaler Richtung, über die den Behälteroberrand 24 umschließende Aussparung 35, auszugssicher in seiner Fügeendposition in der Aufnahmeöffnung 27 festgelegt.

## Patentansprüche

1. Behälter (1), der mindestens einen am oberen Ende einer Behälterwand (2) mit Einsteckscharnieren (8, 18) angelenkten Deckel (5) aufweist, wobei die Einsteckscharniere (8, 18) zur Deckelbefestigung mit einem Lagerabschnitt (9) in eine Aussparung (6) des Deckelrandes eingesetzt werden und mit einem unterhalb des Lagerabschnitts (9) vorgesehenen, an einer Außenfläche (12, 25) mindestens eine vertikal verlaufende Sicherungsnase (13, 26) aufweisenden Steckriegel (10, 12) rastend in eine Aufnahmeöffnung (14, 27) der Behälterwand eintauchen, bis die Sicherungsnase (13, 26) unterhalb der Aufnahmeöffnung (13, 26) ihre eingesteckte Position einnimmt,
**dadurch gekennzeichnet,**
**daß** die Sicherungsnase (13, 26) eine in den Begrenzungen der Aufnahmeöffnung (14, 27) ausgebildete Durchtrittsausnehmung (15, 28) durchtaucht und nach einer Verschiebung des Steckriegels (10, 22) innerhalb der Aufnahmeöffnung (14, 27) in horizontaler Fügerichtung (17, 37) unter dem Behälteroberrand (4) neben der Aufnahmeöffnung (14, 27) zur Anlage kommt.

2. Behälter nach Anspruch 1,
**dadurch gekennzeichnet,**
**daß** die Sicherungsnase (26) keilförmig ausgebildet ist.

3. Behälter nach Anspruch 1 oder 2,
**dadurch gekennzeichnet,**
**daß** die Sicherungsnase (26) auf ihrer einer Unterseite (31) des Behälteroberrandes (24) zugewandten Oberfläche (29) mit mindestens einer Fügepositionserhöhung (30) ausgebildet ist.

4. Behälter nach Anspruch 2,
**dadurch gekennzeichnet,**
**daß** die Fügepositionserhöhung (30) als auf der waagerechten Oberfläche (29) der Sicherungsnase (26) mittig angeordnete Rippe (30) ausgebildet ist.

5. Behälter nach einem der Ansprüche 1 bis 4,
**dadurch gekennzeichnet,**
**daß** der Sicherungsnase (26) an der Unterseite (31) des Behälteroberrandes (24) mindestens eine nach unten abgewinkelte Sicherungsrippe (32) zugeordnet ist.

6. Behälter nach einem der Ansprüche 1 bis 5,
**dadurch gekennzeichnet,**
**daß** an dem der Durchtrittsausnehmung (28) zugewandten Ende der Aufnahmeöffnung (27) beidseitig eine Sicherungsrippe (32, 33) vorgesehen ist.

7. Behälter nach einem der Ansprüche 1 bis 6,
**dadurch gekennzeichnet,**
**daß** das Einsteckscharnier (18) an dem von der Sicherungsnase (26) entfernten Stirnende (34) des Steckriegels (22) unterhalb eines Scharnier-Lagerabschnitts (19) eine waagerecht verlaufende Aussparung (35) aufweist.

## Claims

1. Container (1), which has at least one lid (5) hinged at the upper end of a container wall (2) with plug-in hinges (8, 18), wherein, for the purpose of securing the lid, the plug-in hinges (8, 18) are set into a hollow (6) in the lid edge by means of an embedded section (9) and, by means of a plug-in bar (10, 12) which is provided below the embedded section (9) and has at least one vertically running securing projection (13, 26) on an outer surface (12, 25), descend in a locking manner into an accommodation opening (14, 27) of the container wall until the securing projection (13, 26) takes up its plugged-in position below the accommodation opening (13, 26),
**characterized**
**in that** the securing projection (13, 26) descends through a pass-through recess (15, 28) formed in the boundaries of the accommodation opening (14, 27) and, after displacement of the plug-in bar (10, 22) inside the accommodation opening (14, 27) in the horizontal fitting direction (17, 37), comes to bear under the container upper edge (4) adjacent to the accommodation opening (14, 27).

2. Container according to Claim 1,
**characterized**
**in that** the securing projection (26) is of a wedge-shaped construction.

3. Container according to Claim 1 or 2,
**characterized**
**in that** the securing projection (26) is constructed with at least one fitting-position prominence (30) on its surface (29) facing an underside (31) of the container upper edge (24).

4. Container according to Claim 2,
**characterized**
**in that** the fitting-position prominence (30) is constructed as a rib (30) arranged centrally on the horizontal surface (29) of the securing projection (26).

5. Container according to one of Claims 1 to 4,
**characterized**
**in that** the securing projection (26) on the underside (31) of the container upper edge (24) is assigned at least one downwardly angled securing rib (32).

6. Container according to one of Claims 1 to 5,
**characterized**
**in that** a securing rib (32, 33) is provided on both sides of the end of the accommodation opening (27) which faces the pass-through recess (28).

7. Container according to one of Claims 1 to 6,
**characterized**
**in that** the plug-in hinge (18) has a horizontally running hollow (35) at the front end (34) of the plug-in bar (22) remote from the securing projection (26), below a hinge-embedded section (19).

## Revendications

1. Réservoir (1), qui présente au moins un couvercle (5) articulé sur: l'extrémité supérieure d'une paroi de réservoir (2) avec des charnières à emboîtement (8, 18), les charnières à emboîtement (8, 18) étant insérées pour la fixation de couvercle avec une partie de palier (9) dans un évidement (6) du bord de couvercle et plongeant, avec un verrou emboîtable (10, 12) prévu au-dessous de la partie de palier (9) et présentant sur une surface externe (12, 25) au moins un ergot de blocage (13, 26) agencé verticalement, par encliquetage dans une ouverture de logement (14, 27) de la paroi de réservoir jusqu'à ce que l'ergot de blocage (13, 26) occupe sa position emboîtée au-dessous de l'ouverture de logement (13, 26),
**caractérisé en ce que**
l'ergot de blocage (13, 26) traverse une ouverture de passage (15, 28) formée dans les délimitations de l'ouverture de logement (14, 27) et vient s'appuyer après un déplacement du verrou emboîtable (10, 22) à l'intérieur de l'ouverture de logement (14, 27) dans le sens d'assemblage (17, 37) horizontal au-dessous de la paroi supérieure du réservoir (4) à côté de l'ouverture de logement (14, 27).

2. Réservoir selon la revendication 1,
**caractérisé en ce que**
l'ergot de blocage (26) est conçu en forme de clavette.

3. Réservoir selon la revendication 1 ou 2,
**caractérisé en ce que**
l'ergot de blocage (26) est formé sur sa surface (29), tournée vers un côté inférieur (31) du bord supérieur de réservoir (24), avec au moins une élévation de la position d'assemblage (30).

4. Réservoir selon la revendication 2,
**caractérisé en ce que**
l'élévation de la position d'assemblage (30) est conçue sous forme de nervure (30) disposée au centre sur la surface (29) horizontale de l'ergot de blocage (26).

5. Réservoir selon l'une quelconque des revendications 1 à 4,
**caractérisé en ce que**
l'ergot de blocage (26) est attribué sur le côté inférieur (31) du bord supérieur de réservoir (24) au moins à une nervure de blocage (32) coudée vers le bas.

6. Réservoir selon l'une quelconque des revendications 1 à 5,
**caractérisé en ce qu'**
une nervure de blocage (32, 33) est prévue des deux côtés sur l'extrémité, tournée vers l'évidement de passage (28), de l'ouverture de logement (27).

7. Réservoir selon l'une quelconque des revendications 1 à 6,
**caractérisé en ce que**
la charnière à emboîtement (18) présente un évidement (35) agencé horizontalement sur l'extrémité avant (34), éloignée de l'ergot de blocage (26), du verrou à emboîtement (22) au-dessous d'une partie de palier à charnière (19).
